# EUROPEAN PATENT APPLICATION

(11) **EP 4 826 947 A1**
(43) Date of publication of application: **21.10.2026**
(21) Application number: 25900580.9
(22) Date of filing: 02.12.2025
(51) Int. Cl.: H02J 3/44, H02J 3/38, H02M 7/48

(54) **METHOD FOR DETERMINING POWER GRID PHASE SEQUENCE OF POWER CONVERTER, AND CONTROLLER AND SYSTEM**

(30) Priority: 03.12.2024 CN 202411771659
(71) Applicant: Shanghai Moorewatt Energy Technology Co., Ltd., Shanghai 200131 (CN)
(72) Inventor: YANG, Ze, Shanghai 200131 (CN)
(74) Representative: Ipsilon
(86) International application number: PCT/CN2025/139472
(87) International publication number: WO 2026/119154

(57) **Abstract**

The present disclosure relates to a method for determining a power grid phase sequence of a power converter, and a controller and a system. The method in one aspect is applied to a first controller, and comprises: when all single-phase power converters are in a grid-connected power generation state, controlling remaining phase circuits in a multi-phase power grid system to be disconnected from corresponding single-phase power converters; sending a first state query request to each single-phase power converter; and on the basis of received first feedback information corresponding to the first state query request, determining a single-phase power converter, a power grid phase sequence of which is a target phase circuit, wherein the target phase circuit corresponds to any phase circuit in the multi-phase power grid system, and the remaining phase circuits correspond to phase circuits in the multi-phase power grid system other than the target phase circuit.

## Description

### RELATED APPLICATIONS

The present disclosure claims priority to Chinese Patent Application No. 2024117716597, filed on December 3, 2024, and entitled "Method for Determining Grid Phase Sequence of Power Converter, Controller, and System", which is incorporated herein by reference in its entirety.

### TECHNICAL FIELD

The present disclosure relates to the field of communication technologies, and more particularly, to a method for determining a grid phase sequence of a power converter, a controller, and a system.

### BACKGROUND

In a photovoltaic three-phase system, a plurality of single-phase power converters (such as micro-inverters) are respectively connected to a first phase circuit, a second phase circuit, and a third phase circuit of a three-phase power grid system. In order to improve power generation efficiency or balance three-phase output, it is necessary to accurately determine a grid phase sequence of each single-phase power converter in the three-phase power grid system, that is, to determine which phase circuit each single-phase power converter is connected to, so as to facilitate individual control of the single-phase power converter corresponding to each phase circuit.

However, because the physical distances between phase lines are very short, when the single-phase power converters communicate with a controller, communication signals may crosstalk between the phases. Therefore, when determining the grid phase sequence of the single-phase power converters in the three-phase power grid system, the controller cannot accurately distinguish the signals from the phases, thus resulting in low accuracy of the determination result of the grid phase sequence of each single-phase power converter.

### SUMMARY

Based on this, in view of the above technical problems, it is necessary to provide a method for determining a grid phase sequence of a power converter, a controller, and a system with high accuracy.

A first aspect of the present disclosure provides a method for determining a grid phase sequence of a power converter. The method is applied to a first controller, and the method is configured for determining the grid phase sequence corresponding to each single-phase power converter connected to a multi-phase power grid system. The method includes:
controlling a remaining phase circuit in the multi-phase power grid system to be disconnected from a corresponding single-phase power converter, when each single-phase power converter is in a state of grid-connected power generation;
sending a first status query request to each single-phase power converter; and
determining a single-phase power converter whose grid phase sequence is a target phase circuit according to received first feedback information corresponding to the first status query request.

The target phase circuit corresponds to any phase circuit in the multi-phase power grid system, and the remaining phase circuit corresponds to a phase circuit in the multi-phase power grid system other than the target phase circuit.

In an embodiment, a communication mode between the first controller and each single-phase power converter includes a wireless communication mode or a power line carrier communication mode.

Determining the single-phase power converter whose grid phase sequence is the target phase circuit according to the received first feedback information corresponding to the first status query request includes:
determining a grid phase sequence of a single-phase power converter, whose first feedback information includes first status information, as the target phase circuit, wherein the first status information is configured to indicate that a corresponding single-phase power converter is in an operating state; and
determining a grid phase sequence of a single-phase power converter, whose first feedback information includes second status information, as not being the target phase circuit, wherein the second status information is configured to indicate that a corresponding single-phase power converter is not in the operating state.

In an embodiment, a communication mode between the first controller and each single-phase power converter includes a one-to-one wired communication mode.

Determining the single-phase power converter whose grid phase sequence is the target phase circuit according to the received first feedback information corresponding to the first status query request includes:
determining a grid phase sequence of a single-phase power converter that feeds back the first feedback information as the target phase circuit.

In an embodiment, the multi-phase power grid system is a three-phase grid system, the target phase circuit includes a first phase circuit, and the remaining phase circuit includes a second phase circuit and a third phase circuit.

Controlling the remaining phase circuit in the multi-phase power grid system to be disconnected from the corresponding single-phase power converter, includes: controlling the second phase circuit and the third phase circuit to be disconnected from corresponding single-phase power converters.

Determining the single-phase power converter whose grid phase sequence is the target phase circuit according to the received first feedback information corresponding to the first status query request, includes: determining the single-phase power converter whose grid phase sequence is the first phase circuit according to the first feedback information.

In an embodiment, after step of determining the single-phase power converter whose grid phase sequence is the target phase circuit according to the received first feedback information corresponding to the first status query request, the method further includes:
controlling the second phase circuit and the third phase circuit to be connected to the corresponding single-phase power converters;
controlling the first phase circuit and the third phase circuit to be disconnected from the corresponding single-phase power converters when all the single-phase power converters are in the state of grid-connected power generation;
sending a second status query request to each single-phase power converter whose grid phase sequence is not the first phase circuit; and
determining a single-phase power converter whose grid phase sequence is the second phase circuit according to received second feedback information corresponding to the second status query request.

In an embodiment, after step of determining the single-phase power converter whose grid phase sequence is the second phase circuit according to the received second feedback information corresponding to the second status query request, the method further includes:
controlling the first phase circuit and the third phase circuit to be connected to the corresponding single-phase power converters;
controlling the first phase circuit and the second phase circuit to be disconnected from the corresponding single-phase power converters when each single-phase power converter is in the state of grid-connected power generation;
sending a third status query request to each single-phase power converter whose grid phase sequence is neither the first phase circuit nor the second phase circuit; and
determining a single-phase power converter whose grid phase sequence is the third phase circuit according to received third feedback information corresponding to the third status query request.

In an embodiment, after step of determining the single-phase power converter whose grid phase sequence is the second phase circuit according to the received second feedback information corresponding to the second status query request, the method further includes:
determining a grid phase sequence of a single-phase power converter, whose grid phase sequence is neither the first phase circuit nor the second phase circuit, as the third phase.

In an embodiment, whether all the single-phase power converters are in the state of grid-connected power generation is determined according to steps of:
sending a fourth status query request to each the single-phase power converter;
determining that each single-phase power converter is in the state of grid-connected power generation when a first quantity is equal to a second quantity, wherein the first quantity is the number of pieces of fourth feedback information corresponding to the fourth status query request, received within a preset duration, and the second quantity is a number of single-phase power converters connected to the multi-phase power grid system; and
determining that not all the single-phase power converters are in the state of grid-connected power generation when the first quantity is not equal to the second quantity.

A second aspect of the present disclosure provides a method for determining a grid phase sequence of a power converter. The method is applied to a first controller, the first controller is communicatively connected to a second controller, the second controller is configured to control connection and disconnection between each single-phase power converter and a corresponding phase circuit of a multi-phase power grid system, and the method is configured for determining a grid phase sequence corresponding to each single-phase power converter connected to the multi-phase power grid system. The method includes:
sending a first control signal to the second controller when each single-phase power converter is in a state of grid-connected power generation, and the first control signal being configured for the second controller to perform an operation of opening a remaining switch;
sending a first status query request to each single-phase power converter; and
determining a single-phase power converter whose grid phase sequence is a target phase circuit according to received first feedback information corresponding to the first status query request.

The remaining switch is configured to control connection and disconnection between a single-phase power converter corresponding to a remaining phase circuit in the multi-phase power grid system and the remaining phase circuit, the target phase circuit corresponds to any phase circuit in the multi-phase power grid system, and the remaining phase circuit corresponds to a phase circuit in the multi-phase power grid system other than the target phase circuit.

A third aspect of the present disclosure provides a method for determining a grid phase sequence of a power converter. The method is applied to a second controller, the second controller is configured to control connection and disconnection between each single-phase power converter and a corresponding phase circuit of a multi-phase power grid system, and the method is configured for determining a grid phase sequence corresponding to each single-phase power converter connected to the multi-phase power grid system. The method includes:
receiving a first control signal sent by a first controller when all single-phase power converters are in a state of grid-connected power generation; and
performing an operation of opening a remaining switch based on the first control signal to allow the first controller to: send a first status query request to each single-phase power converter in a case where a target switch is closed and the remaining switch is opened, and determine a single-phase power converter whose grid phase sequence is a target phase circuit according to received first feedback information corresponding to the first status query request.

The target switch is configured to control connection and disconnection between the single-phase power converter corresponding to the target phase circuit in the multi-phase power grid system and the target phase circuit. The remaining switch is configured to control connection and disconnection between a single-phase power converter corresponding to a remaining phase circuit in the multi-phase power grid system and the remaining phase circuit. The target phase circuit corresponds to any phase circuit in the multi-phase power grid system, and the remaining phase circuit corresponds to a phase circuit in the multi-phase power grid system other than the target phase circuit.

A fourth aspect of the present disclosure provides a first controller, including a memory and a processor. The memory has a computer program stored thereon, and the processor, when executing the computer program, performs steps of the methods of the first aspect and/or the second aspect.

In an embodiment, the first controller includes a switch module. A process of the processor executing controlling the remaining phase circuit in the multi-phase power grid system to be disconnected from the corresponding single-phase power converter includes: the processor being configured to control the remaining phase circuit to be disconnected from the corresponding single-phase power converter through the switch module.

A fifth aspect of the present disclosure provides a second controller, including a memory and a processor. wherein the memory has a computer program stored thereon, and the processor, when executing the computer program, performs steps of the method of the third aspect.

A sixth aspect of the present disclosure provides a power system, including: a plurality of single-phase power converters, a relay, and a first controller.

A first terminal of a target switch in the relay is connected to the controller and is configured to be connected to a target phase circuit of a multi-phase power grid system, a second terminal of the target switch is connected to a single-phase power converter corresponding to the target phase circuit; a first terminal of a remaining switch in the relay is connected to a gateway controller and is configured to be connected to a remaining phase circuit of the multi-phase power grid system, and a second terminal of the remaining switch is connected to a single-phase power converter corresponding to the remaining phase circuit. The target phase circuit corresponds to any phase circuit in the multi-phase power grid system, and the remaining phase circuit correspond to a phase circuit in the multi-phase power grid system other than the target phase circuit.

The gateway controller includes a memory and a processor, the memory has a computer program stored thereon, and the processor, when executing the computer program, performs steps of the methods of the first aspect and/or the second aspect.

In the method for determining the grid phase sequence of the power converter, the controller, and the system, the method of the first aspect is applied to the first controller to determine the grid phase sequence corresponding to each single-phase power converter connected to the multi-phase power grid system. The method includes controlling the remaining phase circuit in the multi-phase power grid system to be disconnected from the corresponding single-phase power converter when all the single-phase power converters are in the state of grid-connected power generation, sending the first status query request to each single-phase power converter, and determining the single-phase power converter whose grid phase sequence is the target phase circuit according to the received first feedback information corresponding to the first status query request. The target phase circuit corresponds to any phase circuit in the multi-phase power grid system, and the remaining phase circuit corresponds to the phase circuit in the multi-phase power grid system other than the target phase circuit. In this way, when all the single-phase power converters connected to the multi-phase power grid system can operate normally in grid-connected power generation, the connection between the target phase circuit and its corresponding single-phase power converter is maintained, while the remaining phase circuit is disconnected from corresponding single-phase power converter, so that, when the multi-phase power grid system is in a state where only one phase circuit is connected to its corresponding single-phase power converter and no power transmission occurs in the remaining phase circuit, the operating state of each single-phase power converter is actively queried, and the grid phase sequence of the single-phase power converters is then determined based on the feedback information from the single-phase power converters, thereby preventing the communication crosstalk between the phase circuits from impacting the accuracy of grid phase sequence identification. Adopting the method for determining grid phase sequence can improve the accuracy of grid phase sequence identification when single-phase power converters are integrated into a multi-phase power grid system, thereby enhancing the start-up efficiency of the single-phase power converter grid connection. By adopting the method for determining the grid phase sequence, the grid phase sequence of each single-phase power converter can be accurately identified, thereby supporting precise power control for each phase circuit and improving the power generation revenue of the power system.

### BRIEF DESCRIPTION OF THE DRAWINGS

In order to illustrate the technical solutions in the embodiments of the present disclosure or in the related art more clearly, the accompanying drawings required in the description of the embodiments or the related art will be briefly introduced below. Obviously, the drawings in the following description are only embodiments of the present disclosure, and for those of ordinary skill in the art, other drawings can be obtained based on the disclosed drawings without creative efforts.
FIG. 1 is an application scenario diagram of a method for determining a grid phase sequence in an embodiment;
FIG. 2 is an application scenario diagram of the method for determining the grid phase sequence in another embodiment;
FIG. 3 is a schematic flowchart of the method for determining the grid phase sequence in an embodiment;
FIG. 4 is a schematic flowchart of the method for determining the grid phase sequence in another embodiment;
FIG. 5 is a schematic flowchart of determining whether all single-phase power converters are in a state of grid-connected power generation in an embodiment;
FIG. 6 is a schematic flowchart of the method for determining the grid phase sequence in another embodiment; and
FIG. 7 is a schematic flowchart of the method for determining the grid phase sequence in another embodiment.

### DETAILED DESCRIPTION OF EMBODIMENTS

The technical solutions in the embodiments of the present disclosure will be described clearly and completely below with reference to the accompanying drawings in the embodiments of the present disclosure. Obviously, the described embodiments are merely a part of the embodiments of the present disclosure, rather than all of the embodiments. Based on the embodiments in the present disclosure, all other embodiments obtained by a person of ordinary skill in the art without creative efforts shall fall within the protection scope of the present disclosure.

Unless otherwise defined, all technical and scientific terms used herein have the same meaning as commonly understood by those of ordinary skill in the art to which the present disclosure belongs. The terms used in the specification of the present disclosure herein are only for the purpose of describing specific embodiments and are not intended to limit the present disclosure.

It can be understood that the terms "first", "second", etc., used in the present disclosure, may be used herein to describe various elements, but these elements are not limited by these terms. These terms are only used to distinguish one element from another. For example, without departing from the scope of the present disclosure, a first resistor may be referred to as a second resistor, and similarly, a second resistor may be referred to as a first resistor. Both the first resistor and the second resistor are resistors, but they are not the same resistor.

It can be understood that the "connection" in the following embodiments, if there are transmissions of electrical signals or data between connected circuits, modules, units, etc., should be understood as "electrical connection", or "communication connection", etc.

It can be understood that "at least one" refers to one or more, and "a plurality of" refers to two or more. "At least a portion of an element" refers to a portion or all of the element.

As used herein, the singular forms "a", "an", and "the" may also include the plural forms unless the context clearly dictates otherwise. It can also be understood that the terms "comprising/including" or "having", etc., specify the presence of stated features, integers, steps, operations, components, parts, or combinations thereof, but do not preclude the possibility of the presence or addition of one or more other features, integers, steps, operations, components, parts, or combinations thereof. Moreover, the term "and/or" used in this specification includes any and all combinations of the associated listed items.

The power converters involved in the embodiments of the present disclosure are each a type of power conversion device configured to convert electrical energy from one form to another, so as to realize energy transmission and control under different power requirements. The power converters can be micro-inverters, energy storage converters, or the like. For example, a micro-inverter can convert direct current (DC) into alternating current (AC), the DC input terminal of the micro-inverter is connected to a DC source (photovoltaic module), and the AC output terminal of the micro-inverter can be connected to an AC power grid and AC equipment. A single-phase power converter means that the AC side has a single-phase output or a single-phase input, and the single-phase power converter is connected to one of phase circuits of the AC power grid or AC equipment. The single-phase power converter can be a single-phase micro-inverter, a single-phase energy storage converter, or the like.

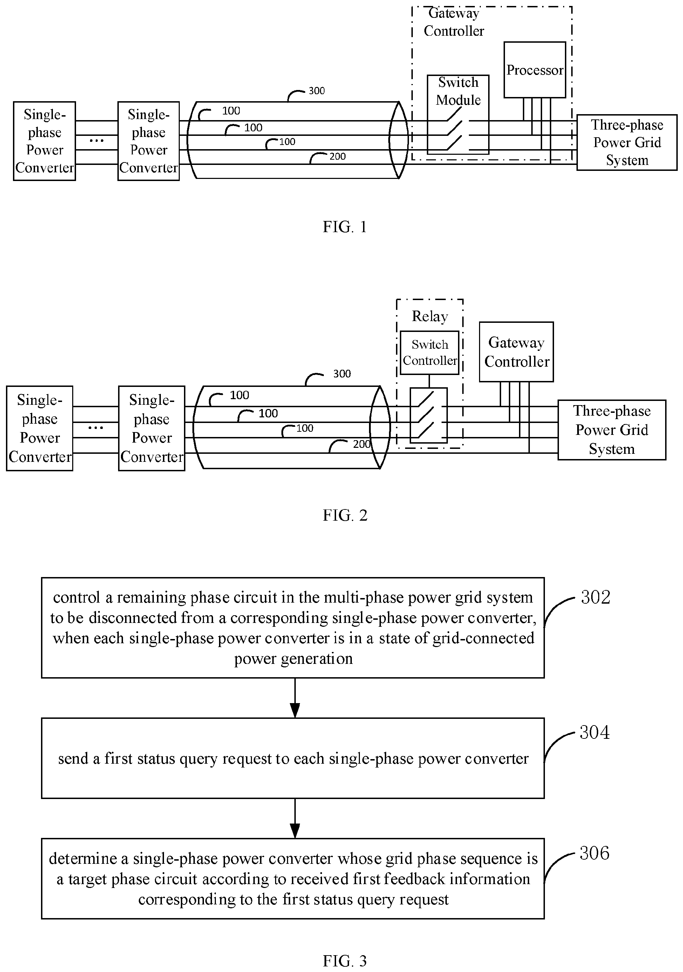

In an exemplary embodiment, the provided method for determining a grid phase sequence of a power converter can be applied to the application scenario shown in FIG. 1 or FIG. 2. Referring to FIG. 1 and FIG. 2, a plurality of single-phase power converters are connected to a first phase circuit, a second phase circuit, and a third phase circuit of a three-phase power grid system, respectively, and the plurality of single-phase power converters can be regarded as a single-phase power converter array. A gateway controller, serving as a control center of the single-phase power converter array, is connected to each phase circuit and the neutral circuit of the three-phase power grid system, and communicates with each single-phase power converter respectively to monitor the operating states of all the single-phase power converters and control the output of each single-phase power converter, thereby realizing precise power control for each phase circuit of the three-phase power grid system. Furthermore, the gateway controller is configured to upload device data of each single-phase power converter to a management system, a cloud network management system, etc., via communication modes such as Fast Ethernet (FE), Wireless Local Area Network (WLAN), 4G, or 5G. In other embodiments, other types of controllers may also be communicatively connected to each single-phase power converter and control the connection and disconnection between each single-phase power converter and the multi-phase power grid system.

Exemplarily, as shown in FIG. 1 and FIG. 2, three lines connected to switches respectively represent three live phase lines 100 of the three-phase power grid system, the remaining one line represents the zero line 200 (or the neutral line) of the three-phase power grid system, and a cylinder represents a conduit 300 that houses the three live phase lines 100 and the zero line 200, that is, the four phase lines are contained within a single cable. It should be noted that, during on-site wiring, the single-phase power converters shown in FIG. 1 and FIG. 2 are connected to the corresponding phase circuits respectively, however at this time, the gateway controller has not yet obtained the wiring relationships.

In the example of the application scenario shown in FIG. 1, the gateway controller includes a processor and a switch module. The processor is configured to communicate with the single-phase power converters, and the switch module is configured to control the connection or disconnection between each single-phase power converter and the corresponding phase circuit of the three-phase power grid system. The switch module can realize individual control of the connection and disconnection between each single-phase power converter and the corresponding phase circuit. Optionally, the switch module has a multi-pole multi-throw structure. It can be understood that the gateway controller in FIG. 1 is a gateway controller integrated with a relay.

In the example of the application scenario shown in FIG. 2, a separate relay is arranged, and the gateway controller controls the connection or disconnection between each single-phase power converter and the corresponding phase circuit of the three-phase power grid system through the relay.

The grid phase sequence in the embodiments of the present disclosure is configured to characterize which phase circuit among the first phase circuit, the second phase circuit, and the third phase circuit in the three-phase power grid system the single-phase power converter is connected to. During the wiring process of connecting a single-phase power converter to the three-phase power grid system, the grid phase sequence is not be pre-configured in the gateway controller. In the related art, when determining the grid phase sequences of the single-phase power converters, because the phase lines are located within the same conduit and the physical distances between the phase lines are very short, communication crosstalk may occur among the single-phase power converters connected to different phase circuits during communication, which leads to low accuracy in the determination result of the grid phase sequence. In view of this, the embodiments of the present disclosure provide the method for determining the grid phase sequence of the power converter.

In an exemplary embodiment, the provided method for determining the grid phase sequence of the power converter can also be applied to application scenarios of other multi-phase power grid systems such as a two-phase power grid system, and is not limited in its application to the three-phase power grid system.

In an exemplary embodiment, as shown in FIG. 3, a method for determining a grid phase sequence of a power converter, for use in a first controller, is provided. The method is used to determine a grid phase sequence corresponding to each single-phase power converter connected to a multi-phase power grid system. The first controller may be a gateway controller, or may be any other controller capable of communicatively connecting to each single-phase power converter and controlling the connection and disconnection between each single-phase power converter and the multi-phase power grid system. Exemplarily, in a case where the multi-phase power grid system is a three-phase power grid system, the first controller may be the gateway controller shown in FIG. 1 or FIG. 2. In this embodiment, the method includes step 302 to step 306.

In Step 302, when each single-phase power converters is in a state of grid-connected power generation, control a remaining phase circuit in the multi-phase power grid system to be disconnected from a corresponding single-phase power converter.

In this embodiment, although the first controller cannot determine a grid phase sequence of each single-phase power converter, it can determine the total quantity of single-phase power converters in the multi-phase power grid system.

After starting up, the first controller controls all single-phase power converters to be connected to their corresponding phase circuits, that is, controls each phase circuit to be connected to its corresponding single-phase power converter, so as to determine whether each single-phase power converter can operate normally. After determining that all the single-phase power converters are in the state of grid-connected power generation, the determination of a grid phase sequence of each single-phase power converter is then started, thereby avoiding inaccuracy in the overall grid phase sequence determination of the single-phase power converters caused by a fault in any single-phase power converter.

In the embodiment, the phase circuits in the multi-phase power grid system are divided into a target phase circuit and the remaining phase circuit. The target phase circuit corresponds to any phase circuit in the multi-phase power grid system, and the remaining phase circuit corresponds to phase circuit in the multi-phase power grid system other than the target phase circuit.

In a possible embodiment, the multi-phase power grid system is a three-phase power grid system, and the three-phase power grid system includes a first phase circuit, a second phase circuit, and a third phase circuit. The target phase circuit may be the first phase circuit, and the remaining circuit may include the second phase circuit and the third phase circuit. In the embodiment, after starting up, the first controller controls the first phase circuit, the second phase circuit, and the third phase circuit to be connected to their corresponding single-phase power converters, so as to determine whether each single-phase power converter can operate normally.

In a possible embodiment, the multi-phase power grid system is a two-phase power grid system. The two-phase power grid system includes a first phase circuit and a second phase circuit, and the target phase circuit may be the first phase circuit, and the remaining phase circuit may be the second phase circuit. In this embodiment, after starting up, the first controller controls the first phase circuit and the second phase circuit to be connected to their corresponding single-phase power converters, so as to determine whether each single-phase power converter can operate normally.

The remaining phase circuit is controlled to be disconnected from a corresponding single-phase power converter, so that each single-phase power converter corresponding to the remaining phase circuit changes from a power generation state to a non-power-generation state. At this time, only the single-phase power converter corresponding to the target phase circuit is in the power generation state, thereby avoiding crosstalk in the communication between the single-phase power converter connected to the target phase circuit and the first controller caused by power transmission in the remaining phase circuit.

Exemplarily, being in the non-power-generation state includes being in a standby state or being in a fault state.

In a possible embodiment, a processor in the first controller controls all the single-phase power converters to be connected to their corresponding phase circuits through the switch module. After determining that all the single-phase power converters are in the state of grid-connected power generation, the processor controls the remaining phase circuit in the multi-phase power grid system to be disconnected from a corresponding single-phase power converter through the switch module.

In Step 304, send a first status query request to each single-phase power converter.

The status query request is configured for a single-phase power converter to feed back a current operating state of this device based on the status query request. The first status query request refers to a status query request sent by the first controller to all the single-phase power converters. Optionally, the current operating state of each single-phase power converter may include a status identification code maintained by the single-phase power converter based on its own operating state. Exemplarily, the status identification code being "00" indicates that the single-phase power converter is currently in a standby state, the status identification code being "01" indicates that the single-phase power converter is currently in an operating state, and the status identification code being "11" indicates that the single-phase power converter is currently in a fault state. Optionally, the current operating state of a single-phase power converter may include a current generated power of the single-phase power converter. Exemplarily, in a case where the single-phase power converter is connected to the corresponding phase circuit in the multi-phase power grid system, the generated power is 5500 watts (W), and in a case where the single-phase power converter is disconnected from the corresponding phase circuit in the multi-phase power grid system, the generated power is 0 W.

In a possible embodiment, the first controller broadcasts the first status query request to all the single-phase power converters in the form of a broadcast.

In Step 306, determine a single-phase power converter whose grid phase sequence corresponds to the target phase circuit, according to received first feedback information corresponding to the first status query request.

The first feedback information refers to feedback information made by a single-phase power converter based on the first status query request, including the current operating state of the single-phase power converter. Exemplarily, in a case where the single-phase power converter is in the power generation state, the feedback information includes a status identification code corresponding to being in the operating state; and in a case where the single-phase power converter is in the non-power-generation state, the feedback information includes a status identification code corresponding to being in the standby state or being in the fault state. Optionally, the feedback information may further include the current generated power of the single-phase power converter. It can be understood that when the single-phase power converter is in the standby state or the fault state, the generated power in the feedback information is 0.

In the case where the target phase circuit is connected to a corresponding single-phase power converter and the remaining phase circuit is disconnected from a corresponding single-phase power converter, only the single-phase power converter connected to the target phase circuit is in the power generation state, i.e., being in the operating state and having generated power, and a single-phase power converter connected to the remaining phase circuit will not reply to the first status query request, i.e., it will not send the first feedback information. Alternatively, the current operating state included in the first feedback information replied by a single-phase power converter connected to the remaining phase circuit is a non-operating state. Therefore, based on received first feedback information, the first controller can identify a single-phase power converter connected to the target phase circuit, and determine the grid phase sequence of the single-phase power converter connected to the target phase circuit as the target phase circuit.

In a first possible implementation of this embodiment, after identifying the single-phase power converter connected to the target phase circuit, the first controller then controls the remaining phase circuit to be connected to a corresponding single-phase power converter, re-selects a phase circuit from the remaining phase circuit as a current target phase circuit, and then determines a phase circuit other than the current target phase circuit as the remaining phase circuit, and then re-executes: controlling the remaining phase circuit in the multi-phase power grid system to be disconnected from a corresponding single-phase power converter, when all the single-phase power converters are in the state of grid-connected power generation; sending the first status query request to each single-phase power converter; and determining the single-phase power converter whose grid phase sequence is the target phase circuit according to the received first feedback information corresponding to the first status query request. The first controller repeatedly performs the process above until all phase circuits in the multi-phase power grid system have been used as target phase circuits, thereby determining the grid phase sequence corresponding to each single-phase power converter.

It can be understood that, in the above-mentioned first implementation, the first controller performs the process repeatedly according to the steps 302 to 306 for a plurality of times. During each execution, the phase circuit that is currently in a connected state is changed, and the remaining phase circuit is disconnected. During each execution, the first status query request is sent to all the single-phase power converters to identify a single-phase power converter corresponding to the remaining phase circuit.

In a first application scenario of the above first implementation, the multi-phase power grid system is a three-phase power grid system. The three-phase power grid system includes a first phase circuit, a second phase circuit, and a third phase circuit. During a first identification, the second phase circuit and the third phase circuit are controlled to be disconnected from corresponding single-phase power converters, and a single-phase power converter whose grid phase sequence is the first phase circuit is identified. During a second identification, the second phase circuit and the third phase circuit are controlled to be connected to corresponding single-phase power converters, and when all the single-phase power converters are in the state of grid-connected power generation, the first phase circuit and the third phase are controlled to be disconnected from corresponding single-phase power converters; a first status query request is sent to each of the single-phase power converters; and a single-phase power converter whose grid phase sequence is the second phase circuit is determined according to received first feedback information corresponding to the first status query request. Then, the first phase circuit and the third phase circuit are controlled to be connected to corresponding single-phase power converters; when all the single-phase power converters are in the state of grid-connected power generation, the first phase circuit and the second phase circuit are controlled to be disconnected from corresponding single-phase power converters; a first status query request is sent to each of the single-phase power converters, and a single-phase power converter whose grid phase sequence is the third phase circuit is determined according to received first feedback information corresponding to the first status query request.

In a second application scenario of the above first implementation, the multi-phase power grid system is the two-phase power grid system, and the two-phase power grid system includes the first phase circuit and the second phase circuit. After the single-phase power converter connected to the first phase circuit is identified, the second phase circuit is controlled to be connected to its corresponding single-phase power converter, and when all the single-phase power converters are in the state of grid-connected power generation, the first phase circuit is controlled to be disconnected from its corresponding single-phase power converter; a first status query request is sent to each of the single-phase power converters; and a single-phase power converter whose grid phase sequence is the second phase circuit is determined according to received first feedback information corresponding to the first status query request.

In other application scenarios of the above first implementation, the multi-phase power grid system may correspond to a multi-phase power grid system other than the two-phase power grid system or the three-phase power grid system. For the specific implementation process, reference may be made to the embodiments of the three-phase power grid system or the two-phase power grid system, which are not described herein repeatedly.

In a second possible implementation of the embodiment, after the single-phase power converter connected to the target phase circuit is identified, during a process of identifying a single-phase power converter connected to the remaining phase circuit, a subsequent status query request is no longer sent to the single-phase power converter whose grid phase sequence has already been determined, thereby improving identification efficiency.

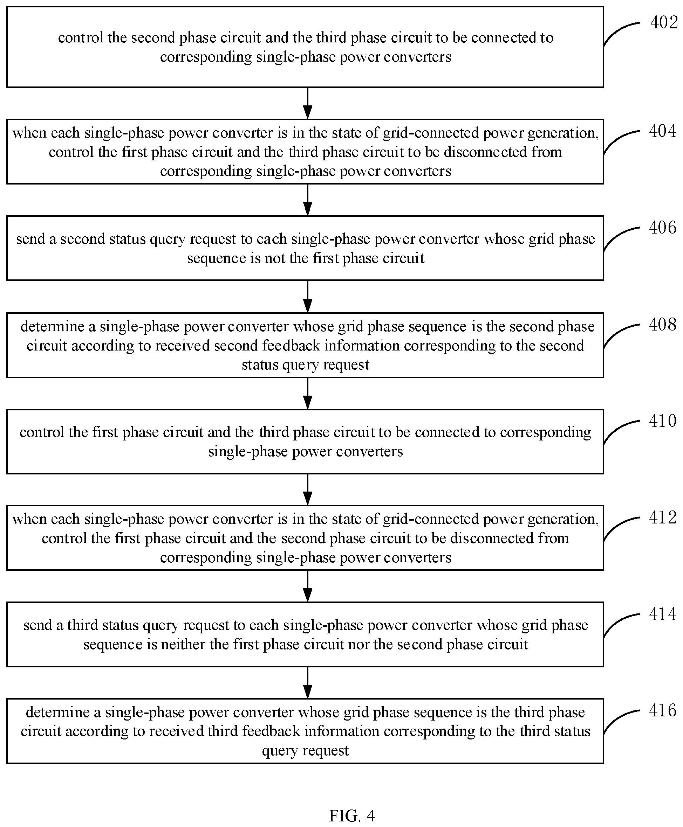

In a first application scenario of a second implementation, the multi-phase power grid system is the three-phase power grid system, and the three-phase power grid system includes the first phase circuit, the second phase circuit, and the third phase circuit. In step 302 to step 306, the target phase circuit includes the first phase circuit, and the remaining phase circuit includes the second phase circuit and the third phase circuit. The process of controlling the remaining phase circuit in the multi-phase power grid system to be disconnected from the corresponding single-phase power converter in step 302 includes: controlling the second phase circuit and the third phase circuit to be disconnected from corresponding single-phase power converters. The process of determining the single-phase power converter whose grid phase sequence is the target phase circuit according to the received first feedback information corresponding to the first status query request in step 306 includes: determining the single-phase power converter whose grid phase sequence is the first phase circuit according to the first feedback information. In an embodiment, after step 306, a single-phase power converter whose grid phase sequence is the second phase circuit is determined according to step 402 to step 408 shown in FIG. 4.

In Step 402, control the second phase circuit and the third phase circuit to be connected to corresponding single-phase power converters.

In Step 404, when each single-phase power converters is in the state of grid-connected power generation, control the first phase circuit and the third phase circuit to be disconnected from corresponding single-phase power converters.

In Step 406, send a second status query request to each single-phase power converter whose grid phase sequence is not the first phase circuit.

The second status query request refers to a request, whose recipient is only a single-phase power converter whose grid phase sequence is not the first phase circuit, and differs from the first status query request in step 304 in that the recipients thereof are not entirely the same. The recipients of the first status query request include all the single-phase power converters controlled by the gateway controller, whereas the recipients of the second status query request exclude any single-phase power converter whose grid phase sequence has already been determined as the first phase circuit.

In Step 408, determine a single-phase power converter whose grid phase sequence is the second phase circuit according to received second feedback information corresponding to the second status query request.

The second feedback information refers to feedback information made by a single-phase power converter based on the second status query request.

In the first application scenario of the above second implementation, after determining the single-phase power converter whose grid phase sequence is the second phase circuit, a single-phase power converter whose grid phase sequence is the third phase may be determined according to the embodiment shown in step 410 to step 416 in FIG. 4. The step 410 to step 416 are as follows.

In Step 410, control the first phase circuit and the third phase circuit to be connected to corresponding single-phase power converters.

In Step 412, when each single-phase power converter is in the state of grid-connected power generation, control the first phase circuit and the second phase circuit to be disconnected from corresponding single-phase power converters.

In Step 414, send a third status query request to each single-phase power converter whose grid phase sequence is neither the first phase circuit nor the second phase circuit.

The third status query request refers to a request, whose recipient is a single-phase power converter whose grid phase sequence is neither the first phase circuit nor the second phase circuit, and differs from the first status query request and the second status query request in that the recipients thereof are not entirely the same.

In Step 416, determine a single-phase power converter whose grid phase sequence is the third phase circuit according to received third feedback information corresponding to the third status query request.

In the first application scenario of the above second implementation, after the single-phase power converter, whose grid phase sequence is the second phase circuit, is determined, the grid phase sequence of the single-phase power converter whose grid phase sequence is neither the first phase circuit nor the second phase circuit may be directly determined as the third phase circuit. In this way, based on the determined single-phase power converters corresponding to the two phase circuits, the single-phase power converter corresponding to the remaining one phase circuit is directly determined, thereby improving the efficiency of determining grid phase sequence.

In a second application scenario of the second implementation, the multi-phase power grid system is the two-phase power grid system, and the two-phase power grid system includes the first phase circuit and the second phase circuit. Exemplarily, after the single-phase power converter connected to the first phase circuit is identified, the second phase circuit may be controlled to be connected to a corresponding single-phase power converter, and when all the single-phase power converters are in the state of grid-connected power generation, the first phase circuit is controlled to be disconnected from the corresponding single-phase power converter, a second status query request is sent to each single-phase power converter whose grid phase sequence is not the first phase circuit, and a single-phase power converter whose grid phase sequence is the second phase circuit is determined according to received second feedback information corresponding to the second status query request. For another example, after the single-phase power converter connected to the first phase circuit is identified, the grid phase sequence of a single-phase power converter whose grid phase sequence is not the first phase circuit may be directly determined as the second phase circuit. In this way, based on the determined single-phase power converter corresponding to the first phase circuit, the single-phase power converter corresponding to the remaining one phase circuit is directly determined, thereby improving the efficiency of determining grid phase sequence.

In other application scenarios of the above second implementation, the multi-phase power grid system may correspond to a multi-phase power grid system other than the two-phase power grid system or the three-phase power grid system. For the specific implementation process, reference may be made to the embodiments of the three-phase power grid system or the two-phase power grid system, which are not described repeatedly herein.

After the grid phase sequence of each single-phase power converters is identified, each phase circuit in the multi-phase power grid system is controlled to be connected to its corresponding single-phase power converter, so that all the single-phase power converters generate power normally.

The method for determining the grid phase sequence of the power converter provided in the above embodiments is applied to the first controller, and the method is used to determine the grid phase sequence of each single-phase power converter connected to the multi-phase power grid system. When all single-phase power converters are in the state of grid-connected power generation, the remaining phase circuit in the multi-phase power grid system is controlled to be disconnected from the corresponding single-phase power converter, the first status query request is sent to each single-phase power converter, and the single-phase power converter whose grid phase sequence is the target phase circuit is determined according to the received first feedback information corresponding to the first status query request. The target phase circuit corresponds to any phase circuit in the multi-phase power grid system, and the remaining phase circuit corresponds to a phase circuit in the multi-phase power grid system other than the target phase circuit. In this way, when all the single-phase power converters connected to the multi-phase power grid system can operate normally in grid-connected power generation, the connection between the target phase circuit and its corresponding single-phase power converter is maintained, while the remaining phase circuit is disconnected from corresponding single-phase power converter, so that, when the multi-phase power grid system is in a state where only one phase circuit is connected to its corresponding single-phase power converter and no power transmission occurs in the remaining phase circuit, the operating state of each single-phase power converter is actively queried, and the grid phase sequence of the single-phase power converters is then determined based on the feedback information from the single-phase power converters, thereby preventing the communication crosstalk between the phase circuits from affecting the accuracy of grid phase sequence identification. The method for determining grid phase sequence provided in the above embodiments can improve the accuracy of identifying grid phase sequence when single-phase power converters are integrated into a multi-phase power grid system, thereby enhancing the start-up efficiency of the single-phase power converter grid connection. By adopting the method for determining the grid phase sequence provided in the above embodiments, the grid phase sequence of each single-phase power converter can be accurately identified, thereby supporting precise power control for each phase circuit and improving the power generation revenue of the power system.

In an exemplary embodiment, a communication mode between the first controller and each single-phase power converter includes a wireless communication mode or a power line carrier (PLC) communication mode. In the embodiment, the process of determining the single-phase power converter whose grid phase sequence is the target phase circuit according to the received first feedback information corresponding to the first status query request includes: determining the grid phase sequence of a single-phase power converter whose first feedback information includes first status information as the target phase circuit; and determining the grid phase sequence of a single-phase power converter whose first feedback information includes second status information as not being the target phase circuit. The first status information is configured to indicate that a corresponding single-phase power converter is in an operating state, and the second status information is configured to indicate that a corresponding single-phase power converter is not in the operating state.

Optionally, the first status information includes an operating status parameter indicating that a single-phase power converter is "in an operating state", and exemplarily, an operating status identification code is "01". The second status information includes another operating status parameter indicating that the single-phase power converter is "in a standby state" or "in a fault state", and exemplarily, another operating status identification code is "10" or "11".

Optionally, the first status information includes that a generated power of the single-phase power converter is greater than 0, and the second status information includes that a generated power of the single-phase power converter is 0.

Optionally, or alternatively, the first status information includes that the generated power of the single-phase power converter is greater than a first threshold and less than a second threshold; and the second status information includes that the generated power of the single-phase power converter is between the first threshold and the second threshold, and a range from the first threshold to the second threshold is a normal range of the generated power of the single-phase power converter.

In a case where the communication mode between the controller and each of the single-phase power converters is the wireless communication mode, when the remaining phase circuit is disconnected from corresponding single-phase power converter, although the single-phase power converter connected to the remaining phase circuit is not in the power generation state, it can still reply with the first feedback information through wireless communication, that is, all the single-phase power converters will reply with the first feedback information to the first controller. The first controller determines the single-phase power converter that is in the operating state according to content included in the first feedback information, so as to determine the single-phase power converter whose grid phase sequence is the target phase. If the first feedback information includes the first status information, it indicates that the corresponding single-phase power converter is in the operating state, and the grid phase sequence of the single-phase power converter is marked as the target phase circuit. If the first feedback information includes the second status information, it indicates that the corresponding single-phase power converter is not in the operating state, and the grid phase sequence of the single-phase power converter is determined as not being the target phase circuit.

In a case where the communication mode between the first controller and each of the single-phase power converters is PLC, when the remaining phase circuit is disconnected from corresponding single-phase power converter, a communication connection between the single-phase power converter connected to the remaining phase circuit and the first controller is also disconnected, and theoretically, the single-phase power converter connected to the remaining phase circuit will neither receive the first status query request nor reply to the first status query request. However, with reference to FIG. 1 and FIG. 2, the plurality of live phase lines and the zero line connecting each single-phase power converter are generally located within the same conduit. In the case of utilizing PLC, although no power transmission occurs in the remaining phase circuit disconnected from the single-phase power converter, and power transmission occurs in only one phase circuit, because the physical distance between the phase lines is very short, the target phase circuit where power transmission occurs will generate PLC crosstalk to the remaining phase circuit, thus causing a part of the single-phase power converters connected to the target phase circuit to reply to the first status query request. In the embodiment, the grid phase sequence of the single-phase power converter whose first feedback information includes the first status information instead of the second status information is determined as the target phase circuit. Since features of the first status information and the second status information are not entirely identical, the first feedback information can be distinguished accordingly, thereby filtering out the first feedback information that crosstalks into the target phase circuit, excluding the corresponding single-phase power converter, and preventing the PLC crosstalk from affecting the accuracy of determining the grid phase sequence.

In an exemplary embodiment, a communication mode between the first controller and each of the single-phase power converters includes a one-to-one wired communication mode. Exemplarily, the one-to-one wired communication mode includes a recommended standard 485 (RS-485) communication mode. In the embodiment, the process of determining the single-phase power converter whose grid phase sequence is the target phase circuit according to the received first feedback information corresponding to the first status query request includes: determining the grid phase sequence of the single-phase power converter that feeds back the first feedback information as the target phase circuit.

In the embodiment, the one-to-one wired communication mode is used for communication between the first controller and each of the single-phase power converters. When the single-phase power converter corresponding to the remaining phase circuit is disconnected, the communication connection between the single-phase power converter connected to the remaining phase circuit and the controller is also disconnected, and the single-phase power converter connected to the remaining phase circuit will neither receive the first status query request nor reply to the first status query request. Therefore, in the embodiment, a single-phase power converter whose grid phase sequence is the target phase circuit can be directly determined according to which single-phase power converter feeds back the first feedback information.

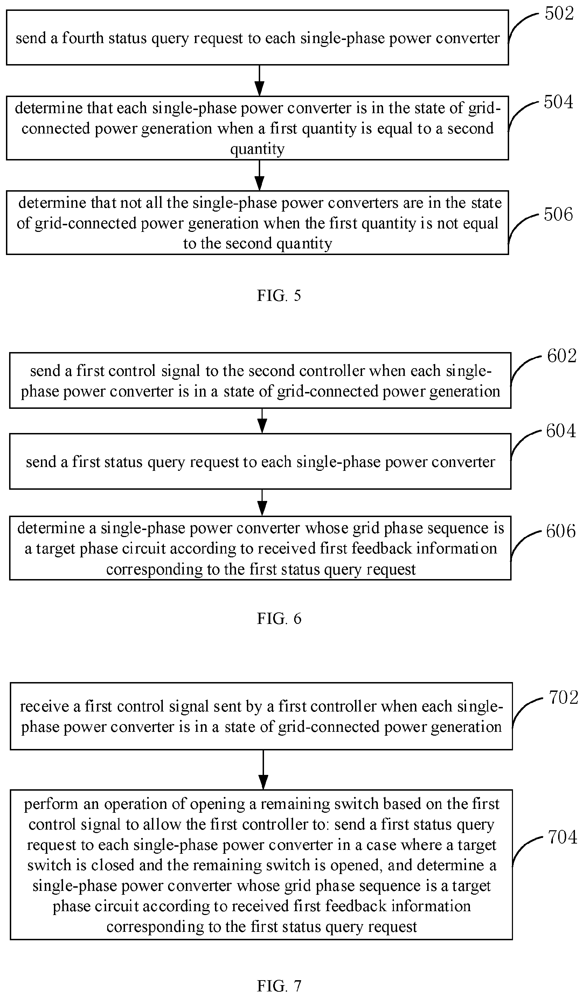

In an exemplary embodiment, referring to FIG. 5, in the provided method for determining a grid phase sequence of a power converter, whether all single-phase power converters are in the state of grid-connected power generation is determined according to the process shown in step 502 to step 506.

In Step 502, send a fourth status query request to each single-phase power converter.

After controlling all the phase circuits to be connected to corresponding single-phase power converters, the fourth status query request is sent to all the single-phase power converters to obtain a current operating state of each single-phase power converter.

Exemplarily, requested content of the fourth status query request is identical to those of the first status query request, the second status query request, and the third status query request.

In Step 504, when a first quantity is equal to a second quantity, determine that each single-phase power converters are in the state of grid-connected power generation.

The first quantity is the number of pieces of fourth feedback information corresponding to the fourth status query request received within a preset duration, and the second quantity is the number of the single-phase power converters connected to the multi-phase power grid system.

In a possible embodiment, within the preset duration, the first controller sends the fourth status query request to each of the single-phase power converters according to a preset query frequency until the preset duration ends or all the single-phase power converters reply with the fourth feedback information, so as to improve efficiency in obtaining the operating states of all the single-phase power converters.

In a possible embodiment, the first controller sends the fourth status query request to each of the single-phase power converters once, and counts the number of single-phase power converters that reply to the fourth status query request within the preset duration. When a single-phase power converter replies to the fourth status query request after the preset duration, it is determined that the single-phase power converter is not in the state of grid-connected power generation, and the single-phase power converter is excluded from the count.

In Step 506, when the first quantity is not equal to the second quantity, determine that not all the single-phase power converters are in the state of grid-connected power generation.

When the first quantity is not equal to the second quantity, a power generation function fault may occur to some of the single-phase power converters, or a communication fault may exist between some of the single-phase power converters and the gateway controller, or other reasons may exist. Therefore, when the first quantity is not equal to the second quantity, it is determined that not all the single-phase power converters are in the state of grid-connected power generation, and the subsequent method for determining the grid phase sequence is not executed, thereby avoiding inaccurate identification.

In an exemplary embodiment, referring to FIG. 6, a method for determining a grid phase sequence of a power converter is provided. The method is applied to a first controller. The first controller is communicatively connected to a second controller, and the second controller is configured to control connection and disconnection between each single-phase power converter and a corresponding phase circuit of a multi-phase power grid system. The method is configured for determining a grid phase sequence of each single-phase power converter connected to the multi-phase power grid system. The first controller and the second controller are independent of each other. The first controller may be the gateway controller shown in FIG. 2, and the second controller may be the switch controller in the relay shown in FIG. 2. It can be understood that the first controller may also be any other controller capable of communicatively connecting to each single-phase power converter, and controlling the connection and disconnection between each single-phase power converter and the multi-phase power grid system through an external switch. As shown in FIG. 6, the method includes step 602 to step 606.

In Step 602, when each single-phase power converters is in the state of grid-connected power generation, send a first control signal to the second controller. The first control signal is configured for the second controller to perform an operation of opening the remaining switch.

In the embodiment, the phase circuits in the multi-phase power grid system are divided into a target phase circuit and the remaining phase circuit. The target phase circuit corresponds to any phase circuit in the multi-phase power grid system, and the remaining phase circuit corresponds to a phase circuit in the multi-phase power grid system other than the target phase circuit. The remaining switch is configured to control connection and disconnection between the single-phase power converter corresponding to the remaining phase circuit in the multi-phase power grid system and the remaining phase circuit. Correspondingly, in the embodiment, the connection and disconnection between the single-phase power converter corresponding to the target phase circuit in the multi-phase power grid system and the first phase circuit are implemented by controlling a target switch.

In a possible embodiment, the multi-phase power grid system is the three-phase power grid system, and the target switch includes the first switch, and the remaining switch includes the second switch and the third switch. The first control signal is configured for the second controller to perform at least one action of opening the second switch or opening the third switch.

In an example of the above-mentioned embodiment, as shown in FIG. 2, the first switch, the second switch, the third switch, and the switch controller are arranged inside a relay, and the switch controller may be a processor within the relay. The gateway controller controls the connection and disconnection between the phase circuits and their respective single-phase power converters through the relay. A first terminal of the first switch of the relay is connected to the gateway controller and the first phase circuit, and a second terminal of the first switch is connected to the single-phase power converter corresponding to the first phase circuit. A first terminal of the second switch in the relay is connected to the gateway controller and the second phase circuit, and a second terminal of the second switch is connected to the single-phase power converter corresponding to the second phase circuit. A first terminal of the third switch in the relay is connected to the gateway controller and the third phase circuit, and a second terminal of the third switch is connected to the single-phase power converter corresponding to the third phase circuit. The switch controller is configured to control opening and closing of the first switch, the second switch, and the third switch. In the embodiment, when receiving the first control signal, the switch controller opens the second switch and the third switch.

Optionally, the first switch, the second switch, and the third switch are a first contact, a second contact, and a third contact in a multi-pole multi-throw structure inside the relay, and each contact is equivalent to a switch and controls circuit connection and disconnection between the phase circuits and their respective single-phase power converters.

In another example of the above-mentioned embodiment, the multi-phase power grid system is the three-phase power grid system, and the target switch includes the first switch, and the remaining switch includes the second switch and the third switch. The first switch, the second switch, and the third switch each correspond to a switch controller. The respective switch controllers are connected to the gateway controller. The switch controller corresponding to the first switch maintains the first switch in a closed state when receiving the first control signal, the switch controller corresponding to the second switch opens the second switch when receiving the first control signal, and the switch controller corresponding to the third switch opens the third switch when receiving the first control signal.

In Step 604, send a first status query request to each single-phase power converter.

In Step 606, determine a single-phase power converter whose grid phase sequence is a target phase circuit according to received first feedback information corresponding to the first status query request.

After determining the single-phase power converter whose grid phase sequence is the target phase circuit, the first controller sends a control signal for closing the switches between all the phase circuits and the corresponding single-phase power converters to the second controller, or sends a control signal for closing the remaining switch to the second controller, so that all the single-phase power converters can be in the state of grid-connected power generation; and then proceeds to determine the single-phase power converters corresponding to other grid phase sequences.

In a possible embodiment, the multi-phase power grid system is the three-phase power grid system. After determining the single-phase power converter whose grid phase sequence is the first phase circuit, the first controller sends a control signal for closing the switches between all the phase circuits and the corresponding single-phase power converters to the second controller, or sends a control signal for closing the second switch and the third switch to the second controller, so that all the single-phase power converters can be in the state of grid-connected power generation, and then sends a second control signal to the second controller to determine the single-phase power converter whose grid phase sequence is the second phase circuit. The second control signal is configured for the second controller to perform at least one action of opening the first switch and opening the third switch. Thereafter, after determining the single-phase power converter whose grid phase sequence is the second phase circuit, the first controller sends a control signal for closing the switches between all the phase circuits and the corresponding single-phase power converters to the second controller, or sends a control signal for closing the first switch and the third switch to the second controller, so that all the single-phase power converters can be in the state of grid-connected power generation, and then sends a third control signal to the second controller to determine the single-phase power converter whose grid phase sequence is the target phase circuit. The third control signal is configured for the second controller to perform at least one action of opening the second switch or opening the first switch.

Optionally, the second control signal and the third control signal are pre-configured. Optionally, the second control signal is obtained by modifying the first control signal after the first controller identifies the single-phase power converter whose grid phase sequence is the first phase circuit, and the third control signal is obtained by modifying the second control signal after the first controller identifies the single-phase power converter whose grid phase sequence is the second phase circuit.

In the method for determining the grid phase sequence provided in the embodiment, the first controller is connected to the second controller, and the second controller is configured to control connection and disconnection between each single-phase power converter and a corresponding phase circuit of the multi-phase power grid system. The first controller sends corresponding control signal to the second controller, so that the second controller controls one phase circuit in the multi-phase power grid system to be connected to its corresponding single-phase power converter, while the remaining phase circuit is disconnected from a corresponding single-phase power converter. The first controller actively queries the operating states of the single-phase power converters, and determines the single-phase power converter currently in a connected state based on the feedback from the single-phase power converters, thereby identifying the grid phase sequence of each single-phase power converter, which improves the accuracy of determining the grid phase sequence and enhancing the start-up efficiency of the single-phase power converter grid connection.

In an exemplary embodiment, referring to FIG. 7, a method for determining a grid phase sequence of a power converter is provided. The method is described by taking the method applied to a second controller as an example, and the second controller is configured to control connection and disconnection between each single-phase power converter and a corresponding phase circuit of a multi-phase power grid system. As shown in FIG. 7, the method for determining the grid phase sequence provided in this embodiment includes step 702 and step 704.

In Step 702, when each single-phase power converter is in a state of grid-connected power generation, receive a first control signal sent by a first controller.

In Step 704, perform an operation of opening a remaining switch based on the first control signal to allow the first controller to: send a first status query request to each single-phase power converter in a case where a target switch is closed and the remaining switch is opened, and determine a single-phase power converter whose grid phase sequence is a target phase circuit according to received first feedback information corresponding to the first status query request.

The target switch is configured to control connection and disconnection between the single-phase power converter corresponding to the target phase circuit in the multi-phase power grid system and the target phase circuit, and the remaining switch is configured to control connection and disconnection between the single-phase power converter corresponding to the remaining phase circuit in the multi-phase power grid system and the remaining phase circuit. The target phase circuit corresponds to any phase circuit in the multi-phase power grid system, and the remaining phase circuit corresponds to a phase circuit in the multi-phase power grid system other than the target phase circuit.

In a possible embodiment, the multi-phase power grid system is the three-phase power grid system. In step 702 and step 704, the target phase circuit corresponds to the first phase circuit, the target switch corresponds to the first switch, the remaining phase circuit includes the second phase circuit and the third phase circuit, and the remaining switch includes the second switch and the third switch. The process of performing the operation of opening the remaining switch based on the first control signal in step 704 includes: performing at least one action of opening the second switch or the third switch based on the first control signal. In the embodiment, after the first controller determines the single-phase power converter whose grid phase sequence is the first phase circuit, the second controller receives a control signal sent by the first controller for closing the switches between all the phase circuits and the corresponding single-phase power converters, or receives a control signal sent by the first controller for closing the second switch and the third switch, so that after the corresponding control signal is executed, all switches are in a closed state. After the first controller determines that all the single-phase power converters are in the state of grid-connected power generation, the second controller receives a second control signal sent by the first controller, and performs at least one action of opening the first switch and opening the third switch based on the second control signal, so as to allow the first controller to determine the single-phase power converter whose grid phase sequence is the second phase circuit. After the first controller determines the single-phase power converter whose grid phase sequence is the second phase circuit, the second controller receives a control signal sent by the first controller for closing the switches between all the phase circuits and the corresponding single-phase power converters, or receives a control signal sent by the first controller for closing the first switch and closing the second switch, so that after the corresponding control signal is executed, all switches are in a closed state. After the first controller determines that all the single-phase power converters are in the state of grid-connected power generation, the second controller receives a third control signal sent by the first controller, and performs at least one action of opening the second switch or opening the first switch based on the third control signal, so as to allow the first controller to determine the single-phase power converter whose grid phase sequence is the third phase circuit.

The method for determining the grid phase sequence of the power converter provided in the embodiment is applied to the second controller. The second controller, acting as a connection and disconnection control device between each single-phase power converter and a corresponding phase circuit of the multi-phase power grid system, receives a relevant control signal from the first controller, controls one phase circuit in the multi-phase power grid system to be connected to its corresponding single-phase power converter, and disconnects the remaining phase circuit from a corresponding single-phase power converter, so as to allow the first controller to query the operating states of the single-phase power converters under these connection and disconnection states, thereby determining the grid phase sequence of each single-phase power converter, improving the accuracy of determining the grid phase sequence and enhancing the start-up efficiency of the single-phase power converter grid connection.

In an exemplary embodiment, the second controller and the switches are arranged in a relay. In an embodiment where the multi-phase power grid system is a three-phase power grid system, as shown in FIG. 2, the first switch, the second switch, the third switch, and the switch controller are arranged in the relay, and the first controller is the gateway controller. A first terminal of the first switch is connected to the gateway controller and the first phase circuit of the three-phase power grid system, and a second terminal of the first switch is connected to the single-phase power converter corresponding to the first phase circuit. A first terminal of the second switch is connected to the gateway controller and the second phase circuit of the three-phase power grid system, and a second terminal of the second switch is connected to the single-phase power converter corresponding to the second phase circuit. A first terminal of the third switch is connected to the gateway controller and the third phase circuit of the three-phase power grid system, and a second terminal of the third switch is connected to the single-phase power converter corresponding to the third phase circuit.

In an embodiment, the process of performing the operation of opening the remaining switch based on the first control signal includes: opening the second switch and the third switch based on the first control signal.

It should be understood that although the steps in the flowcharts involved in the above embodiments are displayed sequentially as indicated by the arrows, these steps are not necessarily executed sequentially in the order indicated by the arrows. Unless explicitly stated herein, the execution of these steps is not strictly limited in terms of order, and these steps may be executed in other orders. Moreover, at least a portion of the steps in the flowcharts involved in the above embodiments may include a plurality of steps or a plurality of stages. These steps or stages are not necessarily executed and completed at the same time, but may be executed at different moments, and the execution order of these steps or stages is not necessarily performed sequentially, but may be performed in turn or alternately with at least a portion of other steps, or with steps or stages within other steps.

It can be understood that the term "based on" as used in the present disclosure is used to describe one or more factors that influence a determination and does not exclude other factors that may influence the determination. For example, the phrase "determining *A* based on *B*" means that the determination of *A* may be based entirely on or at least in part on factor *B*, that is, *B* is a factor that influences the determination of *A*, but does not exclude that the determination of *A* may also be based on *C*.

Based on the same inventive concept, the embodiments of the present disclosure further provide a device for determining a grid phase sequence of a power converter, which is used to implement the above-mentioned method for determining the grid phase sequence of the power converter. The solution provided by the device for solving the problem is similar to the solution described in the above-mentioned method. Therefore, for specific limitations in the following one or more embodiments of the device for determining the grid phase sequence of the power converter, reference may be made to the limitations on the method for determining the grid phase sequence of the power converter above, which are not described repeatedly herein.

In an exemplary embodiment, the device for determining the grid phase sequence of the power converter is provided. The device is applied to a first controller and is used for identifying the grid phase sequence corresponding to each single-phase power converter connected to a multi-phase power grid system. The device for determining the grid phase sequence includes: an on-off control module, a status query module, and a phase sequence determination module.

The on-off control module is configured to, when all single-phase power converters are in a state of grid-connected power generation, control the remaining phase circuit in the multi-phase power grid system to be disconnected from a corresponding single-phase power converter.

The status query module is configured to send a first status query request to each single-phase power converter.

The phase sequence determination module is configured to determine a single-phase power converter whose grid phase sequence is the target phase circuit according to received first feedback information corresponding to the first status query request.

The target phase circuit corresponds to any phase circuit in the multi-phase power grid system, and the remaining phase circuit corresponds to a phase circuit in the multi-phase power grid system other than the target phase circuit.

In an exemplary embodiment, a communication mode between the controller and each of the single-phase power converters includes a wireless communication mode or a power line (PLC) carrier communication mode. The phase sequence determination module is configured to: determine the grid phase sequence of a single-phase power converter whose first feedback information includes first status information as the target phase circuit, where the first status information is configured to indicate that a corresponding single-phase power converter is in an operating state; and determine the grid phase sequence of a single-phase power converter whose first feedback information includes second status information as not being the target phase circuit, where the second status information is configured to indicate that a corresponding single-phase power converter is not in the operating state.

In an exemplary embodiment, a communication mode between the controller and each of the single-phase power converters includes a one-to-one wired communication mode, and the phase sequence determination module is configured to determine the grid phase sequence of a single-phase power converter that feeds back the first feedback information as the target phase circuit.

In an exemplary embodiment, the multi-phase power grid system is a three-phase power grid system, the target phase circuit includes a first phase circuit, and the remaining phase circuit includes a second phase circuit and a third phase circuit. The on-off control module is configured to control the second phase circuit and the third phase circuit to be disconnected from corresponding single-phase power converters, and the phase sequence determination module is configured to determine a single-phase power converter whose grid phase sequence is the first phase circuit according to the first feedback information.

In an exemplary embodiment, the on-off control module is further configured to control the second phase circuit and the third phase circuit to be connected to corresponding single-phase power converters; and when all the single-phase power converters are in the state of grid-connected power generation, control the first phase circuit and the third phase circuit to be disconnected from corresponding single-phase power converters. The status query module is further configured to send a second status query request to each of the single-phase power converters whose grid phase sequence is not the first phase circuit. The phase sequence determination module is further configured to determine a single-phase power converter whose phase sequence is the second phase circuit according to received second feedback information corresponding to the second status query request.

In an exemplary embodiment, the on-off control module is further configured to control the first phase circuit and the third phase circuit to be connected to corresponding single-phase power converters; and when all the single-phase power converters are in the state of grid-connected power generation, control the first phase circuit and the second phase circuit to be disconnected from corresponding single-phase power converters. The status query module is further configured to send a third status query request to each single-phase power converter whose grid phase sequence is neither the first phase circuit nor the second phase circuit. The phase sequence determination module is further configured to determine a single-phase power converter whose phase sequence is the third phase circuit according to received third feedback information corresponding to the third status query request.

In an exemplary embodiment, the grid phase sequence determination module is further configured to directly determine the grid phase sequence of the single-phase power converter whose grid phase sequence is neither the first phase circuit nor the second phase circuit as the third phase circuit.

In an exemplary embodiment, the status query module is further configured to send a fourth status query request to all the single-phase power converters, and when a first quantity is equal to a second quantity, determine that all the single-phase power converters are in the state of grid-connected power generation, wherein the first quantity is the number of pieces of fourth feedback information corresponding to the fourth status query request received within a preset duration, and the second quantity is the number of the single-phase power converters connected to the three-phase power grid system; and when the first quantity is not equal to the second quantity, determine that not all the single-phase power converters are in the state of grid-connected power generation.

In an exemplary embodiment, a device for determining a grid phase sequence of a power converter is provided. The device is applied to a first controller, and the first controller is connected to a second controller, and the second controller is configured to control connection and disconnection between each single-phase power converter and a corresponding phase circuit of a multi-phase power grid system. The device for determining the grid phase sequence is configured for determining a grid phase sequence of each single-phase power converter connected to a three-phase power grid system. The device for determining the grid phase sequence includes: an on-off control module, a status query module, and a phase sequence determination module.

The on-off control module is configured to, when all single-phase power converters are in the state of grid-connected power generation, send a first control signal to the second controller. The first control signal is configured for the second controller to perform an operation of opening a remaining switch.

The status query module is configured to send a first status query request to each single-phase power converter.

The phase sequence determination module is configured to determine a single-phase power converter whose grid phase sequence is a target phase circuit according to received first feedback information corresponding to the first status query request.

The remaining switch is configured to control connection and disconnection between the single-phase power converter corresponding to the remaining phase circuit in the three-phase power grid system and the remaining phase circuit. The target phase circuit corresponds to any phase circuit in the multi-phase power grid system, and the remaining phase circuit corresponds to a phase circuit in the multi-phase power grid system other than the target phase circuit.

In an exemplary embodiment, a device for determining a grid phase sequence of a power converter is provided, which is applied to a second controller. The device is configured for determining the grid phase sequence of each single-phase power converter connected to a multi-phase power grid system, and the device includes a signal receiving module and an on-off execution module.

The signal receiving module is configured to, when all single-phase power converters are in a state of grid-connected power generation, receive a first control signal sent by a first controller.

The on-off execution module is configured to perform an operation of opening a remaining switch based on the first control signal, so that the first controller, in a case where a target switch is closed and the remaining switch is opened, sends a first status query request to each single-phase power converter, and determines a single-phase power converter whose grid phase sequence is a target phase circuit according to received first feedback information corresponding to the first status query request. The target switch is configured to control connection and disconnection between the single-phase power converter corresponding to the target phase circuit in the multi-phase power grid system and the target phase circuit, and the remaining switch is configured to control connection and disconnection between the single-phase power converter corresponding to the remaining phase circuit in the multi-phase power grid system and the remaining phase circuit. The target phase circuit corresponds to any phase circuit in the multi-phase power grid system, and the remaining phase circuit corresponds to a phase circuit in the multi-phase power grid system other than the target phase circuit.

The modules in the above device for determining the grid phase sequence of the power converter may be fully or partially implemented by software, hardware, or a combination thereof. The above modules may be embedded in or independent of a processor in a network device in the form of hardware, or may be stored in a memory in the network device in the form of software, so that the processor can call and execute operations corresponding to the above modules.

In an exemplary embodiment, a first controller is provided, including a memory and a processor. The memory has a computer program stored therein, and the processor, when executing the computer program, implements the steps in the above embodiments of the method for determining the grid phase sequence applied to the first controller.

In an exemplary embodiment, the provided first controller includes a switch module. The processor is configured to control a remaining phase circuit to be disconnected from a corresponding single-phase power converter through the switch module.

In an exemplary embodiment, the provided first controller is connected to a second controller, and the process, executed by the processor, of controlling the remaining phase circuit in the multi-phase power grid system to be disconnected from a corresponding single-phase power converter includes: the processor being configured to send a first control signal to the second controller, the first control signal being configured for the second controller to perform an operation of opening a remaining switch.

In an exemplary embodiment, a second controller is provided. The second controller includes a memory and a processor, and the memory has a computer program stored therein. The processor, when executing the computer program, implements the steps in the above embodiments of the method for determining the grid phase sequence applied to the second controller.

In an exemplary embodiment, a relay is provided, and the relay includes the second controller and the switches provided in the above embodiments.

In an exemplary embodiment, a power system is provided. Referring to FIG. 2, the power system includes: a plurality of single-phase power converters, a relay, and a first controller. A first terminal of a first switch in the relay is connected to the first controller and is configured to be connected to a target phase circuit of a multi-phase power grid system, a second terminal of the first switch is connected to a single-phase power converter corresponding to the target phase circuit, a first terminal of each remaining switch of the relay is connected to the first controller and is configured to be connected to a remaining phase circuit of the multi-phase power grid system, and a second terminal of each remaining switch is connected to a single-phase power converter corresponding to a remaining phase circuit. The first controller includes a memory and a processor, and the memory has a computer program stored therein. The processor, when executing the computer program, implements the steps in the above embodiments of the method for determining the grid phase sequence of the power converter applied to the first controller.

In an embodiment, a computer-readable storage medium is provided, having a computer program stored thereon. The computer program, when executed by a processor, performs the steps of the method of any one of the embodiments described above.

In an embodiment, a computer program product is provided, including a computer program. The computer program, when executed by a processor, performs the steps of the method of any one of the embodiments described above.

It should be noted that the user information (including but not limited to user equipment information, user personal information, etc.) and data (including but not limited to data used for analysis, stored data, displayed data, etc.) involved in the present disclosure are all information and data authorized by the user or fully authorized by all parties, and the collection, use, and processing of relevant data need to comply with relevant regulations.

Those of ordinary skill in the art can understand that all or part of the processes in the methods of the above embodiments can be implemented by instructing relevant hardware through a computer program. The computer program can be stored in a non-transitory computer-readable storage medium. The computer program, when executed, can perform the processes of the method of any one of embodiments described above. Any reference to a memory, database, or other media used in the embodiments provided in the present application may include at least one of non-transitory memory and transitory memory. The non-transitory memory may include Read-Only Memory (ROM), magnetic tape, floppy disk, flash memory, optical memory, high-density embedded non-transitory memory, resistive memory (ReRAM), Magneto resistive Random-Access Memory (MRAM), Ferroelectric Random-Access Memory (FRAM), Phase Change Memory (PCM), graphene memory, and the like. Transitory memory may include Random Access Memory (RAM) or external cache memory, etc. By way of illustration and not limitation, RAM may be in various forms, such as Static Random-Access Memory (SRAM) or Dynamic Random-Access Memory (DRAM), etc. The databases involved in the embodiments provided in the present disclosure may include at least one of relational databases and non-relational databases. Non-relational databases may include distributed databases based on blockchain, etc., but are not limited thereto. The processors involved in the embodiments provided in the present disclosure may be general-purpose processors, central processing units, graphics processors, digital signal processors, programmable logic devices, data processing logic devices based on quantum computing, etc., but are not limited thereto.

The technical features of the embodiments above can be combined arbitrarily. For the sake of brevity, not all possible combinations of the technical features in the embodiments above are described. However, as long as there is no contradiction in the combinations of the technical features, these combinations should be considered to be within the scope of the specification.

The embodiments above are merely several implementations of the present disclosure, and the descriptions thereof are relatively specific and detailed, but should not be construed as limiting the scope of the patent application. It should be noted that, for those of ordinary skill in the art, various variations and improvements can be made without departing from the concept of the present disclosure, and these variations and improvements all fall within the protection scope of the present disclosure. Therefore, the protection scope of the present disclosure should be subject to the appended claims.

## Claims

1. A method for determining a grid phase sequence of a power converter, wherein the method is applied to a first controller, and the method is configured for determining the grid phase sequence corresponding to each single-phase power converter connected to a multi-phase power grid system; and the method comprises:
controlling a remaining phase circuit in the multi-phase power grid system to be disconnected from a corresponding single-phase power converter, when each single-phase power converter is in a state of grid-connected power generation;
sending a first status query request to each single-phase power converter; and
determining a single-phase power converter whose grid phase sequence is a target phase circuit according to received first feedback information corresponding to the first status query request;
wherein the target phase circuit corresponds to any phase circuit in the multi-phase power grid system, and the remaining phase circuit corresponds to a phase circuit in the multi-phase power grid system other than the target phase circuit.

2. The method according to claim 1, wherein a communication mode between the first controller and each single-phase power converter comprises a wireless communication mode or a power line carrier communication mode; and
determining the single-phase power converter whose grid phase sequence is the target phase circuit according to the received first feedback information corresponding to the first status query request comprises:
determining a grid phase sequence of a single-phase power converter, whose first feedback information comprises first status information, as the target phase circuit, wherein the first status information is configured to indicate that a corresponding single-phase power converter is in an operating state; and
determining a grid phase sequence of a single-phase power converter, whose first feedback information comprises second status information, as not being the target phase circuit, wherein the second status information is configured to indicate that a corresponding single-phase power converter is not in the operating state.

3. The method according to claim 1, wherein a communication mode between the first controller and each single-phase power converter comprises a one-to-one wired communication mode; and
determining the single-phase power converter whose grid phase sequence is the target phase circuit according to the received first feedback information corresponding to the first status query request comprises:
determining a grid phase sequence of a single-phase power converter that feeds back the first feedback information as the target phase circuit.

4. The method according to any one of claims 1 to 3, wherein the multi-phase power grid system is a three-phase grid system, the target phase circuit comprises a first phase circuit, and the remaining phase circuit comprises a second phase circuit and a third phase circuit;
controlling the remaining phase circuit in the multi-phase power grid system to be disconnected from the corresponding single-phase power converter, comprises: controlling the second phase circuit and the third phase circuit to be disconnected from corresponding single-phase power converters; and
determining the single-phase power converter whose grid phase sequence is the target phase circuit according to the received first feedback information corresponding to the first status query request, comprises: determining the single-phase power converter whose grid phase sequence is the first phase circuit according to the first feedback information.

5. The method according to claim 4, wherein after step of determining the single-phase power converter whose grid phase sequence is the target phase circuit according to the received first feedback information corresponding to the first status query request, the method further comprises:
controlling the second phase circuit and the third phase circuit to be connected to the corresponding single-phase power converters;
controlling the first phase circuit and the third phase circuit to be disconnected from the corresponding single-phase power converters when all the single-phase power converters are in the state of grid-connected power generation;
sending a second status query request to each single-phase power converter whose grid phase sequence is not the first phase circuit; and
determining a single-phase power converter whose grid phase sequence is the second phase circuit according to received second feedback information corresponding to the second status query request.

6. The method according to claim 5, wherein after step of determining the single-phase power converter whose grid phase sequence is the second phase circuit according to the received second feedback information corresponding to the second status query request, the method further comprises:
controlling the first phase circuit and the third phase circuit to be connected to the corresponding single-phase power converters;
controlling the first phase circuit and the second phase circuit to be disconnected from the corresponding single-phase power converters when each single-phase power converter is in the state of grid-connected power generation;
sending a third status query request to each single-phase power converter whose grid phase sequence is neither the first phase circuit nor the second phase circuit; and
determining a single-phase power converter whose grid phase sequence is the third phase circuit according to received third feedback information corresponding to the third status query request.

7. The method according to claim 5 or 6, wherein after step of determining the single-phase power converter whose grid phase sequence is the second phase circuit according to the received second feedback information corresponding to the second status query request, the method further comprises:
determining a grid phase sequence of a single-phase power converter, whose grid phase sequence is neither the first phase circuit nor the second phase circuit, as the third phase.

8. The method according to any one of claims 1 to 7, wherein whether all the single-phase power converters are in the state of grid-connected power generation is determined according to steps of:
sending a fourth status query request to each single-phase power converter;
determining that each single-phase power converter is in the state of grid-connected power generation when a first quantity is equal to a second quantity, wherein the first quantity is the number of pieces of fourth feedback information corresponding to the fourth status query request received within a preset duration, and the second quantity is a number of single-phase power converters connected to the multi-phase power grid system; and
determining that not all the single-phase power converters are in the state of grid-connected power generation when the first quantity is not equal to the second quantity.

9. A method for determining a grid phase sequence of a power converter, wherein the method is applied to a first controller, the first controller is communicatively connected to a second controller, the second controller is configured to control connection and disconnection between each single-phase power converter and a corresponding phase circuit of a multi-phase power grid system, and the method is configured for determining a grid phase sequence corresponding to each single-phase power converter connected to the multi-phase power grid system; and the method comprises:
sending a first control signal to the second controller when each single-phase power converter is in a state of grid-connected power generation, and the first control signal being configured for the second controller to perform an operation of opening a remaining switch;
sending a first status query request to each single-phase power converter; and
determining a single-phase power converter whose grid phase sequence is a target phase circuit according to received first feedback information corresponding to the first status query request;
wherein the remaining switch is configured to control connection and disconnection between a single-phase power converter corresponding to a remaining phase circuit in the multi-phase power grid system and the remaining phase circuit, the target phase circuit corresponds to any phase circuit in the multi-phase power grid system, and the remaining phase circuit corresponds to a phase circuit in the multi-phase power grid system other than the target phase circuit.

10. A method for determining a grid phase sequence of a power converter, wherein the method is applied to a second controller, the second controller is configured to control connection and disconnection between each single-phase power converter and a corresponding phase circuit of a multi-phase power grid system, and the method is configured for determining a grid phase sequence corresponding to each single-phase power converter connected to the multi-phase power grid system; and the method comprises:
receiving a first control signal sent by a first controller when each single-phase power converter is in a state of grid-connected power generation; and
performing an operation of opening a remaining switch based on the first control signal to allow the first controller to: send a first status query request to each single-phase power converter in a case where a target switch is closed and the remaining switch is opened, and determine a single-phase power converter whose grid phase sequence is a target phase circuit according to received first feedback information corresponding to the first status query request;
wherein the target switch is configured to control connection and disconnection between the single-phase power converter corresponding to the target phase circuit in the multi-phase power grid system and the target phase circuit; the remaining switch is configured to control connection and disconnection between a single-phase power converter corresponding to a remaining phase circuit in the multi-phase power grid system and the remaining phase circuit; and the target phase circuit corresponds to any phase circuit in the multi-phase power grid system, and the remaining phase circuit corresponds to a phase circuit in the multi-phase power grid system other than the target phase circuit.

11. A first controller, comprising a memory and a processor, wherein the memory has a computer program stored thereon, and the processor, when executing the computer program, performs steps of the method according to any one of claims 1 to 9.

12. The first controller according to claim 11, wherein the first controller comprises a switch module, and a process of the processor executing controlling the remaining phase circuit in the multi-phase power grid system to be disconnected from the corresponding single-phase power converter comprises: the processor being configured to control the remaining phase circuit to be disconnected from the corresponding single-phase power converter through the switch module.

13. A second controller, comprising a memory and a processor, wherein the memory has a computer program stored thereon, and the processor, when executing the computer program, performs steps of the method according to claim 10.

14. A power system, wherein the power system comprises: a plurality of single-phase power converters, a relay, and a first controller, wherein
a first terminal of a target switch in the relay is connected to the controller and is configured to be connected to a target phase circuit of a multi-phase power grid system, a second terminal of the target switch is connected to a single-phase power converter corresponding to the target phase circuit; a first terminal of a remaining switch in the relay is connected to the first controller and is configured to be connected to a remaining phase circuit of the multi-phase power grid system, and a second terminal of the remaining switch is connected to a single-phase power converter corresponding to the remaining phase circuit, wherein the target phase circuit corresponds to any phase circuit in the multi-phase power grid system, and the remaining phase circuit corresponds to a phase circuit in the multi-phase power grid system other than the target phase circuit; and
the first controller comprises a memory and a processor, the memory has a computer program stored thereon, and the processor, when executing the computer program, performs steps of the method according to any one of claims 1 to 9.
